# EUROPÄISCHE PATENTSCHRIFT

(11) **EP 2 097 781 B1**
(45) Veröffentlichungstag und Bekanntmachung des Hinweises auf die Patenterteilung: **03.03.2021**
(21) Anmeldenummer: 07803106.9
(22) Anmeldetag: 31.08.2007
(51) Int. Cl.: G02B 21/00, G01N 21/64, G01N 21/65, G02B 21/16

(54) **LASERMIKROSKOP MIT RÄUMLICH TRENNENDEM STRAHLTEILER**
LASER MICROSCOPE WITH A PHYSICALLY SEPARATING BEAM SPLITTER
MICROSCOPE LASER A DIVISEUR SPATIAL DE FAISCEAU

(30) Priorität: 28.11.2006 DE 102006056429
(43) Veröffentlichungstag der Anmeldung: 09.09.2009
(73) Patentinhaber: Leica Microsystems CMS GmbH, 35578 Wetzlar (DE)
(72) Erfinder: DYBA, Marcus, 69121 Heidelberg (DE)
(74) Vertreter: Schaumburg und Partner Patentanwälte mbB
(86) Internationale Anmeldenummer: PCT/EP2007/059106
(87) Internationale Veröffentlichungsnummer: WO 2008/064932

(56) Entgegenhaltungen:
- EP-A- 1 211 544
- EP-A- 1 617 205
- DE-A1- 10 257 237
- DE-A1- 19 842 153
- US-A- 4 744 663

## Beschreibung

### Gebiet der Erfindung

Die Erfindung betrifft eine Vorrichtung zur Abbildung mindestens einer mikroskopischen Eigenschaft einer Probe. Derartige Vorrichtungen werden insbesondere im Bereich der Mikroskopie eingesetzt, insbesondere zur Untersuchung biologischer oder medizinischer Proben. Auch andere Einsatzgebiete sind jedoch denkbar. Weiterhin betrifft die Erfindung eine Verwendung der Vorrichtung für ein kohärentes Laserspektroskopieverfahren sowie ein Verfahren zur Abbildung mindestens einer mikroskopischen Eigenschaft einer Probe.

### Stand der Technik

Insbesondere im Bereich der Biologie und Medizin wurden in den letzten Jahren stark verbesserte optische Abbildungstechniken entwickelt. Neben der klassischen Lichtmikroskopie, bei welcher für eine Bildgebung auf Streuungs-, Reflexions- und Absorptionseigenschaften der Probe zurückgegriffen wird, gewinnen zunehmend Verfahren an Einfluss, bei welchen entweder molekulare oder atomare Eigenschaften der zu untersuchenden Probe selbst ausgenutzt werden, oder bei denen die Proben gezielt modifiziert werden (beispielsweise durch Anfärben oder durch Verwendung von Markermolekülen oder Markergruppen), um durch diese Modifikationen Auflösung und Kontrast der Bildgebung zu verbessern. Diese Verfahren werden häufig auch unter dem Begriff "Biophotonik" subsumiert. Eine Übersicht derartiger Verfahren wird beispielsweise in S. Liedtke und J. Popp: "Laser, Licht und Leben", Wiley-VCH Verlag GmbH & Co. KG aA, Weinheim, 2006, Seiten 111-133 gegeben.

Eine für die Bildgebung häufig angewandte Technik ist die Fluoreszenzmikroskopie. Dabei wird eine Probe mit Beleuchtungslicht einer oder mehrerer Wellenlängen bestrahlt und von der Probe als Antwort auf dieses Licht emittiertes frequenzverschobenes Lumineszenzlicht (d. h. Fluoreszenzlicht und/oder Phosphoreszenzlicht) detektiert. Um die spektralen Eigenschaften der Probe zu verbessern, werden dabei häufig Anfärbetechniken eingesetzt. Um gezielt auch Mehrphotonenübergänge anregen zu können, werden vielfach neben herkömmlichen Lichtquellen zur Anregung der Probe auch Laser eingesetzt.

Eine der bei der Fluoreszenzmikroskopie hauptsächlich auftretenden Schwierigkeiten besteht darin, bei der Auswertung der von der Probe emittierten Lumineszenz Beleuchtungs- und Detektionslicht voneinander zu trennen. Bei herkömmlichen Fluoreszenzmikroskopen werden für diesen Zweck in der Regel dichroitische Filter oder Spiegel eingesetzt, welche das Beleuchtungslicht von dem zu detektierenden Lumineszenzlicht trennen. Aufgrund der so genannten Stokes-Verschiebung weist das Lumineszenzlicht in der Regel eine größere Wellenlänge auf als das Beleuchtungslicht.

Derartige Techniken sind jedoch mit verschiedenen technischen Herausforderungen verbunden. So sind zum einen optische Bauelemente mit maßgeschneiderten spektralen Transmissions- oder Reflexionseigenschaften technisch nur schwer herstellbar. Zum anderen sind derartige Bauelemente in der Regel unflexibel hinsichtlich der Transmissions- oder Reflexionswellenlänge, so dass bei einem Wechsel der Beleuchtungs- und/oder Lumineszenzwellenlänge häufig ein vollständiger Austausch dieser selektiven optischen Elemente erforderlich ist. Eine weitere Schwierigkeit besteht darin, dass in vielen Fällen die Beleuchtungs- und/oder Lumineszenz-Wellenlängen eine endliche spektrale Breite aufweisen, so dass Beleuchtungs- und Lumineszenzlicht spektral überlappen. Eine Trennung von Beleuchtungs- und Lumineszenzlicht ausschließlich entsprechend der Wellenlänge ist somit nur schwer möglich.

Aus DE 198 42 153 C1 und DE 102 57 237 A1 sind daher Techniken bekannt, bei welchen anstelle einer spektralen Trennung von Beleuchtungs- und Lumineszenzlicht eine räumliche Trennung verwendet wird. So schlägt DE 198 42 153 C2 zur Trennung einen partiell durchlässigen Spiegel vor, welcher zwar Licht der Beleuchtungslichtquelle zu einem Objekt hin umlenkt, ein vom Objekt kommendes Fluoreszenzlicht jedoch zumindest teilweise zum Detektor passieren lässt. Zu diesem Zweck ist die Fläche des Spiegels in eine reflektierende Spiegelfläche und in eine transmittierende Spiegelfläche unterteilt. Das rückwärtig detektierte Fluoreszenzlicht strahlt die Pupillenebene vollständig aus und wird daher weitgehend vollständig die transmittierenden Bereiche des räumlichen Strahlteilers passieren.

Ähnlich schlägt DE 102 57 237 A1 Mittel zur räumlichen Trennung des Beleuchtungslichts vom Detektionslicht vor. Wiederum wird eine Anordnung gezeigt, welche mindestens einen reflektierenden ersten Abschnitt und mindestens einen transmittierenden zweiten Abschnitt aufweist. Der räumlich trennende Strahlteiler steht dabei bevorzugt in oder nahe einer Pupillenebene. Das rückwärtig detektierte Fluoreszenzlicht strahlt auch hier die Pupillenebene vollständig aus und wird daher weitgehend vollständig die transmittierenden Bereiche des räumlichen Strahlteilers passieren.

Ein Vorteil der Verwendung dieser räumlich trennenden Strahlteiler besteht darin, dass auf die oben beschriebenen, nachteiligen spektralen Strahlteiler, wie beispielsweise dichroitische Spiegel oder Strahlteiler in Verbindung mit Filterelementen, verzichtet werden kann.

Nachteilig an den bekannten Fluoreszenzmikroskopen ist jedoch, dass trotz der beschriebenen Verbesserungen durch die Verwendung räumlich trennender Strahlteiler der Kontrast insbesondere bei nicht angefärbten oder nicht modifizierten biologischen Proben, wie bei der CARS-Mikroskopie, häufig an seine Grenzen stößt. Dies ist insbesondere darauf zurückzuführen, dass der Detektionsstrahlung, bei welcher es sich in diesem Fall um eine kohärente Detektionsstrahlung (also eine Strahlung von synchron schwingenden Wellenzügen) handelt, Hintergrundstrahlung überlagert ist, welche zu einem Hintergrundrauschen führt. In der Regel ist daher das Signal-zu-Rausch-Verhältnis, welches den Kontrast der erzielten Abbildungen bestimmt, bei den beschriebenen fluoreszenzmikroskopischen Verfahren begrenzt.

Neben den beschriebenen Fluoreszenzverfahren existieren eine Reihe weiterer spektroskopischer Verfahren, welche sich mit Erfolg auch im Bereich der Biophotonik und Mikroskopie einsetzen lassen. Unter diesen Verfahren sind insbesondere die Verfahren zu nennen, welche auf bekannte Prinzipien der Laserspektroskopie zurückgreifen. Ein Beispiel derartiger Verfahren ist die so genannte CARS-Spektroskopie (kohärente Anti-Stokes-Raman-Streuung), welche beispielsweise ebenfalls in der oben beschriebenen Veröffentlichung von S. Liedtke und J. Popp beschrieben ist. Diese Spektroskopie beruht auf der gleichzeitigen Einstrahlung von Photonen unterschiedlicher Anregungsfrequenzen in die Probe, wobei eine Differenz dieser Anregungsfrequenzen gerade einer Frequenz eines Raman-aktiven Schwingungsübergangs in der Probe entspricht. In diesem Fall emittiert die Probe Licht einer Frequenz, welche der Summe einer der Anregungsfrequenzen und der Frequenz des Raman-aktiven Schwingungsübergangs entspricht.

Auch im Falle von CARS stellt sich jedoch wiederum das Problem, dass im Detektionslicht mehrere Anteile enthalten sind, von denen gezielt eine oder mehrere Frequenzen getrennt detektiert werden sollen. Insbesondere muss der eigentliche CARS-Anteil vom Beleuchtungslicht und von der Raman-Strahlung getrennt detektiert werden. Zum Zweck dieser Trennung wurden verschiedene Messschemata vorgeschlagen, welche sich die kohärenten Eigenschaften des Detektionslichtes zunutze machen. Ein Beispiel eines derartigen Detektionsschemas ist die so genannte "gated heterodyne CARS"-Methode (GH-CARS), welche beispielsweise in M. Greve et al.: "High-contrast chemical imaging with gated heterodyne coherent anti-stokes Raman scattering microscopy", Appl. Physics B 81, 875 (2005) beschrieben ist.

Die bekannten Verfahren zur Trennung des kohärenten Beleuchtungslichts von der Hintergrundstrahlung sind jedoch in der Regel technisch äußerst aufwändig, da, wie beispielsweise bei GH-CARS, zeitauflösende Elektroniken mit komplexen Messschemata verwendet werden müssen. Diese Komplexität senkt die Attraktivität derartiger Methoden für die Anwendung in kostengünstigen mikroskopischen Verfahren erheblich. Zudem sind die beschriebenen Verfahren störanfällig.

US-A-4,744,663 betrifft ein Laser-Scan-Mikroskop zur Erfassung von Kanten einer Fotobeschichtung, z.B. auf einem Wafer. Das Licht eines Lasers wird scannend über einen räumlich trennenden Strahlteiler einer Probe zugeführt, z.B. einer Waferoberfläche. Das direkt zurück reflektierte Licht wird einer ersten Detektorvorrichtung in Rückwärtsrichtung über diesen Strahlteiler zugeführt. Das an der Oberfläche der Probe gestreute Licht wird seitlich an einer Objektivlinse vorbei und über einen donut-förmigen Spiegel auf eine zweite Detektorvorrichtung gelenkt.

EP 1617 205 A1 beschreibt ein Lichtraster-Mikroskop, bei dem kohärentmikroskopische und inkohärent-mikroskopische Untersuchungen durchgeführt werden können, z.B. auch CARS-Spektroskopie und Raman-Spektroskopie. Zur Lichtführung für das Beleuchtungslicht und das Detektionslicht werden verschiedene Strahlteiler verwendet, z. B. auch Strahlteiler mit streifenförmiger Verspiegelung.

### Aufgabe der Erfindung

Es ist daher eine Aufgabe der vorliegenden Erfindung, eine Vorrichtung zur Abbildung von Probeneigenschaften bereitzustellen, welche insbesondere in der Biophotonik einsetzbar ist und welche die oben beschriebenen Nachteile der aus dem Stand der Technik bekannten Vorrichtungen vermeidet. Insbesondere soll die Vorrichtung kostengünstig und einfach realisierbar sein, soll jedoch gleichzeitig Abbildungen mit hohem Kontrast und gutem Signal-zu-Rausch-Verhältnis ermöglichen.

### Beschreibung der Erfindung

Diese Aufgabe wird gelöst durch eine Vorrichtung mit den Merkmalen des Anspruchs 1 und ein Verfahren gemäß den Merkmalen des Anspruchs 8. Vorteilhafte Weiterbildungen der Erfindung sind in den Unteransprüchen dargestellt, welche jeweils einzeln oder in Kombination realisiert werden können.

Die Erfindung beruht, ausgehend von dem oben beschriebenen Stand der Technik zur Fluoreszenzmikroskopie, im Wesentlichen auf der Idee, räumlich trennende Strahlteiler einzusetzen, wie sie beispielsweise in DE 198 42 153 C2 oder in DE 102 57 237 A1 beschrieben sind, d. h. die Trennung des Beleuchtungs- vom Detetektionslicht erfolgt nicht wellenlängenabhängig beziehungsweise spektral unter Ausnutzung des Stokesshiftes, sondern durch eine Aufteilung des Strahlteilers in einen reflektierenden und einen transmittierenden Abschnitt. Im Unterschied zu den in diesen Druckschriften genannten Verfahren wird jedoch nicht oder nicht ausschließlich das Fluoreszenzlicht zur Signalgewinnung ausgenutzt, sondern von der Probe emittiertes kohärentes Licht. Eine wesentliche Idee der Erfindung beruht also auf der Erkenntnis, dass sich die räumlich trennenden Strahlteiler einsetzen lassen, um kohärentes Detektionslicht von inkohärentem Detektionslicht zu trennen. Insofern kombiniert die Erfindung die aus der Fluoreszenzmikroskopie bekannte Idee eines räumlich trennenden Strahlteilers zur Trennung von Beleuchtungs- und Detektionslicht mit den Vorteilen, die eine kohärente Spektroskopie bietet, und löst dabei auch das Problem der Trennung des inkohärenten Hintergrundsignals vom kohärenten Detektionssignal, wie z. B. in der CARS-Mikroskopie.

Die vorgeschlagene Vorrichtung weist mindestens eine Lichtquelle zur Erzeugung mindestens eines kohärenten Beleuchtungslichtes mit mindestens einer Beleuchtungswellenlänge beziehungsweise Beleuchtungsfrequenz auf. Vorteilhafterweise umfasst die Lichtquelle mindestens einen Laser, wobei sowohl Laser im gepulsten (z. B. im Pikosekunden- beziehungsweise Femtosekundenbereich) als auch im kontinuierlichen Betrieb eingesetzt werden können. Zum Erreichen einer hohen kurzfristigen Intensität haben sich insbesondere Kurzpulslaser als geeignet erwiesen, beispielsweise Piko- oder Femtosekundenlaser. Vorzugsweise umfasst die Lichtquelle mindestens eine Lichtquelle variabler Wellenlänge, insbesondere eine durchstimmbare Wellenlänge, beispielsweise einen Farbstofflaser, einen durchstimmbaren Gaslaser, einen Diodenlaser oder einen durchstimmbaren Festkörperlaser. Für bestimmte Arten der kohärenten Spektroskopie, für welche zwei oder mehr Wellenlängen bereitgestellt werden müssen, kann die Vorrichtung zwei oder mehr getrennte oder gekoppelte Laserquellen beinhalten, gegebenenfalls auch in Kombination mit herkömmlichen Lichtquellen. Auch kann ein einzelner Laserstrahl beispielsweise aufgespalten werden in mindestens zwei Teilstrahlen, wobei mindestens einer der Teilstrahlen durch ein geeignetes optisches Element, wie beispielsweise einen optischen parametrischen Oszillator, in seiner Frequenz verschoben wird. Anschließend lassen sich die mindestens zwei Teilstrahlen vorteilhafterweise wieder überlagern, so dass kohärentes Beleuchtungslicht mit mehreren Beleuchtungsfrequenzen auf die Probe eingestrahlt wird.

Neben der Lichtquelle umfasst die Vorrichtung mindestens eine bildgebende Optik zur Abbildung des mindestens einen Beleuchtungslichtbündels auf mindestens einen Bereich innerhalb der Probe. Unter einer Abbildung kann dabei insbesondere eine Fokussierung verstanden werden, wobei die Fokussierung in mindestens einer räumlichen Dimension erfolgen soll. Auf diese Weise lassen sich beispielsweise Linienscans durchführen (siehe auch unten). Beispielsweise kann diese bildgebende Optik eine oder mehrere Linsen umfassen, vorzugsweise ein oder mehrere Mikroskopobjektive, sowie weitere optische Elemente, wie beispielsweise Blenden, Prismen oder ähnliches. Vorzugsweise umfasst die bildgebende Optik eine konfokale Optik, wie sie dem Fachmann beispielsweise aus dem Bereich konfokaler Mikroskope bekannt ist. Bei dieser Technik wird mindestens eine konfokale Blende im Detektionsstrahlengang eingesetzt, so dass immer nur Signale eines kleinen Volumensegments innerhalb der Probe aufgenommen werden. Zusätzlich kann eine entsprechende Blende im Beleuchtungsstrahlengang eingesetzt werden.

Vorzugsweise ist die bildgebende Optik und/oder die Vorrichtung derart eingerichtet, dass eine Scanvorrichtung vorgesehen ist, welche angeordnet ist, um die Probe punktweise oder zeilenweise mit dem Beleuchtungslicht abzurastern. Derartige Scanvorrichtungen, welche ebenfalls aus dem Bereich der Mikroskopie bekannt sind, beruhen beispielsweise auf einem schrittweisen Verschieben der Probe relativ zum Strahlengang des Beleuchtungslichtbündels, oder, alternativ oder zusätzlich, vorzugsweise auf einem Abrastern der Probe mittels eines schnell bewegten Spiegels, beispielsweise ein zeilen- oder punktweises Abrastern. Auf diese Weise können nacheinander verschiedene Bereiche der Probe (beispielsweise Punkte oder Linien) schrittweise beleuchtet werden.

Das Beleuchtungslicht wird erfindungsgemäß derart gewählt, dass dieses mit der Probe wechselwirkt. Diese Wechselwirkung soll derart erfolgen, dass die Probe als Antwort kohärentes Detektionslicht emittiert. Derartige Vorgänge und Wechselwirkungen sind aus dem Bereich der Laserspektroskopie bekannt, so dass das Beleuchtungslicht in seinen Eigenschaften entsprechend der Probe und/oder Modifikationen der Probe (z. B. Anfärbungen) gewählt werden kann. So kommen beispielsweise Mehrphotonen-Absorptionsprozesse, das bereits erwähnte CARS, SHG (Second Harmonie Generation), Frequenzmischung, Vierwellenmischung, oder einfache Reflexion als kohärente Laserspektroskopieverfahren in Betracht. Um das Beleuchtungslicht und dessen Wechselwirkung mit der Probe zu optimieren, kann auch zuvor ein spektroskopischer Wellenlängenscan der Probe durchgeführt werden

Von der Probe geht somit Detektionslicht aus, welches folgende Bestandteile aufweist: Ein erster Bestandteil des Detektionslichtes ist ein inkohärenter Anteil, Dieser setzt sich z. B. aus einem Lumineszenzanteil (z. B. Fluoreszenz oder Phosphoreszenz) zusammen, welcher in der Regel inkohärent ist und typischerweise einen Stokes-Shift relativ zum Beleuchtungslicht aufweist, sowie unter Umständen weiteren Anteilen, wie beispielsweise (inkohärentem) Raman-Licht. Weiterhin ist im Detektionslicht noch ein kohärenter Anteil enthalten, welcher sich wiederum aus mehreren Bestandteilen zusammensetzt. Ein erster kohärenter Anteil ist der an der Probe, einer Probenhalterung oder einem Probenträger reflektierter kohärenter Detektionslichtanteil (beziehungsweise bei einem Transmissionsaufbau, z.B. F-CARS, transmittierter Detektionslichtanteil), welcher in der Regel eine zum Beleuchtungslicht identische Wellenlänge aufweist. Ein zweiter kohärenter Detektionslichtanteil ist ein Anteil mit vom Beleuchtungslicht verschiedener Wellenlänge. Beispielsweise kann dies ein Anteil einer Frequenzverdopplung in der Probe sein, oder auch das oben beschriebene CARS-Detektionslicht. Um die Begriffsbildung zu vereinheitlichen, werden alle diese Arten von Detektionslicht im Folgenden als "von der Probe emittiert" bezeichnet, wobei der Begriff der Emission in diesem Fall das Detektionslicht umfassen soll, welches reflektiert oder transmittiert wird.

Im Gegensatz zu inkohärent emittiertem Streulicht, welches mit dem Beleuchtungslicht in keiner Phasenbeziehung steht, weist dieses kohärente Detektionslicht eine feste Phasenbeziehung zum Beleuchtungslicht auf. Dieses kohärente Detektionslicht kann nunmehr in einer Vorwärts anordnung (das heißt Detektor und Beleuchtungslichtquelle sind auf gegenüberliegenden Seiten der Probe angeordnet) oder in Rückwärtsanordnung (das heißt Beleuchtungslichtquelle und Detektor sind auf der gleichen Seite der Probe angeordnet) detektiert werden.

Die vorgeschlagene Vorrichtung löst die Problematik der Trennung dieser verschiedenen Anteile von Detektionslicht zunächst durch Verwendung mindestens eines im Strahlengang angeordneten räumlich trennenden Strahlteilers. Dieser Strahlteiler kann beispielsweise ausgestaltet sein wie in den oben beschriebenen Druckschriften DE 198 42 153 C2 oder DE 102 57 237 A1 beschrieben. Dementsprechend kann der räumlich trennende Strahlteiler beispielsweise mindestens zwei Bereiche mit unterschiedlichen Transmissionseigenschaften aufweisen, wobei mindestens ein erster Bereich mit hoher Transmission und mindestens ein zweiter Bereich mit hoher Reflektivität umfasst ist. Vorzugsweise ist (um eine Aufheizung des räumlich trennenden Strahlteilers zu vermeiden) der zweite Bereich mit sehr hoher Reflektivität ausgestattet. Beispielsweise kann es sich um teilverspiegelte Bereiche handeln mit einem für die jeweiligen Wellenlängen transparenten Trägersubstrat.

Der räumlich trennende Strahlteiler wird vorzugsweise in einer Pupillenebene eingesetzt, also in einer Abbildungsebene des Beleuchtungslichtes (und somit, aufgrund der Umkehrbarkeit des Strahlenganges, auch des kohärenten Detektionslichtes). Beispielsweise kann es sich um eine Ebene handeln, in welcher das Beleuchtungslicht fokussiert ist. Alternativ könnte jedoch eine Ebene gewählt werden, in welcher das Beleuchtungslicht und das kohärente Detektionslicht einen erheblich kleineren Strahldurchmesser aufweisen (beispielsweise weniger als 20 %, vorzugsweise weniger als 10 %) als das inkohärente Detektionslicht. Vorzugsweise leuchtet das inkohärente Detektionslicht am Ort des räumlich trennende Strahlteilers dessen Durchtrittsöffnung im Wesentlichen vollständig aus.

Die Funktionsweise des räumlich trennenden Strahlteilers beruht auf der Tatsache, dass kohärente Detektionslichtanteile wieder in die definierten Bereiche des räumlich trennenden Strahlteilers abgebildet werden, während inkohärente Lichtanteile vorzugsweise im Wesentlichen die volle Pupille ausstrahlen. Ursächlich hierfür ist, dass ein kohärentes Signal aus dem Probenraum in der Pupillenebene des räumlichen Strahlteilers so interferiert, dass es dort dieselbe Struktur erzeugt wie das zuvor eingestrahlte Beleuchtungssignal. Ein inkohärentes Signal setzt sich jedoch aus einer Vielzahl unabhängiger Punktstrahler zusammen, von denen jeder einzelne die volle Pupillenebene des räumlich trennenden Strahlteilers beleuchtet. Die Summe aller Punktstrahler leuchtet damit ebenfalls die volle Pupillenebene aus.

Dieser Effekt wird, wie oben beschrieben, bei der Trennung des von der Probe ausgesandten Detektionslichtes in einen kohärenten Anteil und einen inkohärenten Anteil ausgenutzt. Die Trennung erfolgt mit hoher Effizienz, hohem Unterdrückungsverhältnis und ist kostengünstig realisierbar. Auf aufwändige, wellenlängenselektive Elemente kann an dieser Stelle verzichtet werden.

Nach Trennung der kohärenten und inkohärenten Lichtanteile im von der Probe emittierten Licht setzen sich die kohärenten Detektionslichtanteile, wie oben beschrieben, nunmehr noch aus Anteilen mit den Wellenlängen des Beleuchtungslichtes und Anteilen mit von der Wellenlänge des Beleuchtungslichtes verschiedenen Wellenlängen zusammen. Um diese Anteile zu trennen, ist ausgehend von der Probe dem räumlich trennenden Strahlteiler vorzugsweise im Strahlengang nachgeordnet, mindestens ein zusätzliches Strahlteilerelement vorgesehen. Dieses zusätzliche Strahlteilerelement ist eingerichtet, um das kohärente Detektionslicht der Beleuchtungswellenlänge von dem kohärenten Detektionslicht mit mindestens einer von der Beleuchtungswellenlänge verschiedenen Wellenlänge (dem eigentlichen Signal) zu trennen. Letzterer Lichtanteil wird durch mindestens eine Detektionsvorrichtung detektiert.

Das inkohärente Detektionslicht kann mittels einer zusätzlichen Detektionsvorrichtung detektiert werden und später zur weiteren Auswertung genutzt werden. Auf diese Weise lassen sich beispielsweise zusätzlich inkohärente Raman-Anteile oder Lumineszenzanteile detektieren und gegebenenfalls Mehrkanalbilder erzeugen. Das inkohärente Detektionssignal kann beispielsweise ein Raman-, Fluoreszenz-, Phosphoreszenz- oder FRET (fluorescence resonant energy transfer)-Signal sein. Auch lassen sich die inkohärenten Anteile für eine zusätzliche Bereinigung der kohärenten Signale (z. B. Abzug eines Hintergrundrauschens) einsetzen. Alle Bildanteile oder auch einzelne Bildanteile lassen sich beispielsweise abspeichern, z. B. als Funktion mindestens einer räumlichen Koordinate, oder auch auf einem Bildschirm darstellen.

Für die Detektionsvorrichtung und die zusätzliche Detektionsvorrichtung lassen sich grundsätzlich übliche Arten von Detektionsvorrichtungen einsetzen, welche dem Fachmann bekannt sind. Insbesondere für die Detektion des kohärenten CARS-Lichtes beziehungsweise -Signals (jedoch auch für andere Arten der Laserspektroskopie) haben sich jedoch aufgrund der häufig sehr schwachen Signale insbesondere Avalanche-Photodioden (insbesondere in Zeilenanordnung für einen Einsatz in einem Zeilenscanverfahren), Photomultiplier (insbesondere mehrkanalige Photomultiplier) oder auch CCD-Kameras (insbesondere wiederum in Zeilenanordnung), insbesondere so genannte EMCCD-Kameras (Electron Multiplier-CCD-Kamera), als vorteilhaft erwiesen.

Für das mindestens eine zusätzliche Strahlteilerelement zur Aufspaltung der kohärenten Detektionslichtanteile kann auf dem Fachmann bekannte wellenlängenselektive Techniken zurückgegriffen werden. So können beispielsweise dichroitische Strahlteiler, Farbfilter oder ähnliches eingesetzt werden. Auch auf Polarisationsstrahlteiler kann zurückgegriffen werden, wobei ausgenutzt wird, dass dem kohärenten Detektionslicht mit der Beleuchtungswellenlänge beispielsweise eine andere Polarisation aufgeprägt werden kann als dem zu detektierenden kohärenten Detektionslicht. So kann beispielsweise dem Beleuchtungslicht, sofern dies linearpolarisiert ist, mittels eines Phasenplättchens eine Zirkularpolarisation aufgeprägt werden, wobei eine Reflexion an der Probe zu einer Zirkularpolarisation mit entgegengesetztem Drehsinn führt, was nach erneutem Durchgang durch das Phasenplättchen zu einer Linearpolarisation mit senkrechter Polarisationsrichtung im Vergleich zur ursprünglichen Polarisation des Beleuchtungslichtes führt. Das Detektionslicht mit von der Beleuchtungswellenlänge unterschiedlicher Wellenlänge, welches das Phasenplättchen nur einmal passiert, weist somit eine unterschiedliche Polarisation auf, so dass eine Trennung beispielsweise mittels eines Polarisationsstrahlteilers in kohärentes Detektionslicht der Beleuchtungswellenlänge und kohärentes Detektionslicht mit von der Beleuchtungswellenlänge unterschiedlicher Wellenlänge möglich ist. Auch andere Arten der Trennung dieser Detektionslichtanteile sind jedoch denkbar, sowie Kombinationen der oben beschriebenen Trennverfahren. So kann grundsätzlich das zusätzliche Strahlteilerelement auch einen zusätzlichen räumlich trennenden Strahlteiler umfassen.

Die oben beschriebene Vorrichtung und das beschriebene Verfahren lassen sich insbesondere derart einsetzen, dass das kohärente Beleuchtungslichtbündel mindestens eine Anregungsfrequenz eines Schwingungsübergangs in der Probe aufweist oder dass ein ganzzahliges Vielfaches einer Frequenz des Beleuchtungslichtbündels einer Anregungsfrequenz eines Schwingungsübergangs in der Probe entspricht. Alternativ oder zusätzlich kann die Probe mit mindestens zwei Anregungsfrequenzen bestrahlt werden, wobei die mindestens zwei Anregungsfrequenzen derart gewählt werden, dass eine Linearkombination dieser Anregungsfrequenzen (beispielsweise a₁ω₁ + a₂ω₂, mit a₁, a₂ ganzzahlig, positiv oder negativ) der Frequenz eines quantenmechanischen Übergangs in der Probe entspricht. Ein Beispiel für ein derartiges Verfahren ist die beschriebene CARS-Spektroskopie beziehungsweise CARS-Mikroskopie. Die erfindungsgemäße Vorrichtung lässt sich jedoch neben CARS auch für weitere kohärente Laserspektroskopieverfahren einsetzen, beispielsweise Mehrphotonen-Absorptionsspektroskopie oder Anregungs-/Abfragespektroskopie mit zeitlich verzögerten Pulsen.

### Zeichnungen

Ausführungsbeispiele der vorliegenden Erfindung sind in den Zeichnungen dargestellt und in der nachfolgenden Beschreibung näher erläutert.

Es zeigen:
- Figur 1: ein Ausführungsbeispiel einer Vorrichtung zur Abbildung mindestens einer mikroskopischen Eigenschaft einer Probe, umfassend einen räumlich trennenden Strahlteiler und ein zusätzliches Strahlteilerelement;
- Figur 2: ein schematisiertes CARS-Termschema; und
- Figuren 3A und 3B: Beispiele räumlich trennender Strahlteiler für die Verwendung in der Anordnung gemäß Figur 1.

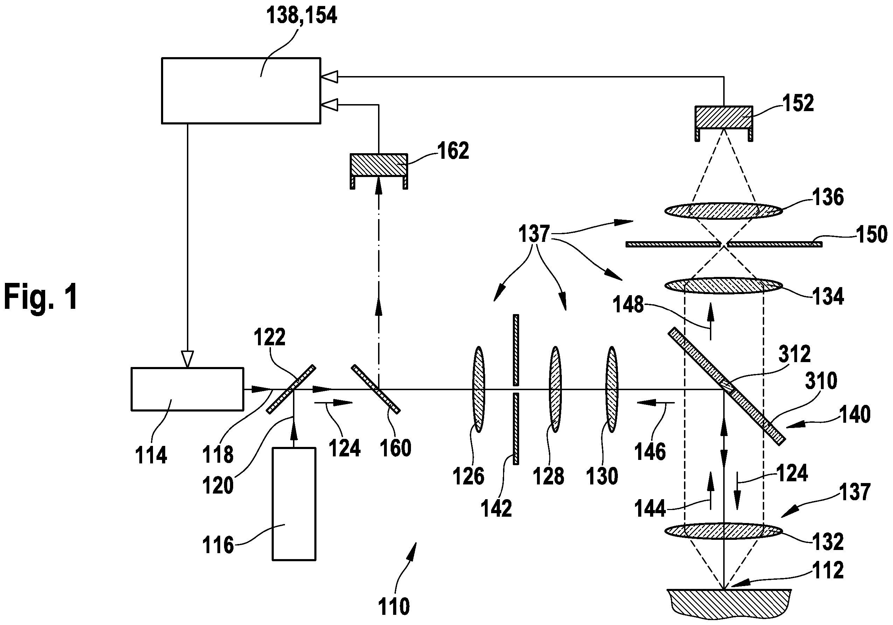

In Figur 1 ist eine erfindungsgemäße Vorrichtung 110 zur Abbildung mindestens einer mikroskopischen Eigenschaft einer Probe 112 dargestellt. Die einzelnen Elemente der Vorrichtung 110 sind dabei höchst schematisiert abgebildet und dienen lediglich der Erläuterung des Funktionsprinzips. Es sei im Weiteren angenommen, dass es sich bei der Probe 112 vorzugsweise um eine biologische Probe auf einem entsprechenden Probenträger handelt, deren räumliche Struktur abgebildet werden soll.

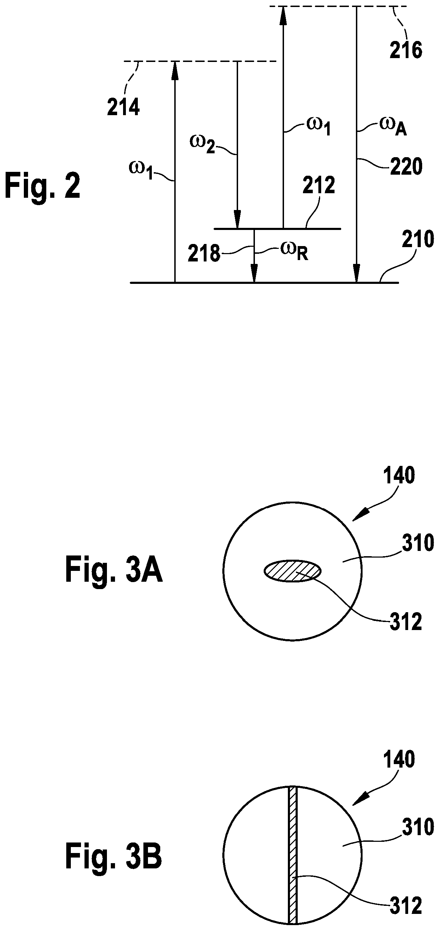

Für diese Abbildung der räumlichen Struktur der Probe 112 wird das Messprinzip der kohärenten Anti-Stokes-Raman-Streuung (CARS) verwendet. In Figur 2 ist ein schematisiertes Termschema dieser Art der kohärenten Laserspektroskopie dargestellt, welches im Zusammenhang mit Figur 1 erläutert werden soll. Es sei jedoch darauf hingewiesen, dass Vorrichtungen 110 gemäß der in Figur 1 dargestellten Art auch für andere Arten der kohärenten Laserspektroskopie eingesetzt werden können.

Die Vorrichtung 110 gemäß Figur 1 weist zwei kohärente Lichtquellen 114, 116 auf, welche in diesem Fall als Laserlichtquellen ausgebildet sind. Dabei ist der erste Laser 114 derart ausgestaltet, dass dieser einen Beleuchtungslichtanteil 118 mit einer Beleuchtungsfrequenz ω₁ ausstrahlt (in Figur 1 mit Bezugsziffer 118 bezeichnet), wohingegen der zweite Laser einen Beleuchtungslichtanteil 120 mit der Frequenz ω₂ emittiert, welcher in Figur 1 symbolisch mit der Bezugsziffer 120 bezeichnet ist. Beide Beleuchtungslichtanteile 118, 120 werden in einem Strahlteiler 122 überlagert und bilden das Beleuchtungslicht 124. Die Strahlteiler 122 und 160 können dabei auch zusammengefasst akustooptisch z. B. als AOBS (Acousto Optical Beam Splitter) ausgeführt sein, wie z. B. in DE 199 06 757 B4 beschrieben.

Wie anhand des Termschemas in Figur 2 zu erkennen ist, sind die Beleuchtungslichtanteile 118, 120 in ihren Frequenzen gerade so gewählt, dass deren Differenz einem bekannten Raman-aktiven Schwingungsübergang in der Probe 112 entspricht. Zu diesem Zweck können beispielsweise bekannte (beispielsweise durch eine vorhergehende spektroskopische Untersuchung ermittelte) Eigenschaften der Probe 112 selbst ausgenutzt werden, oder die Probe kann, wie oben beschrieben, entsprechend angefärbt werden, beispielsweise mit einem Farbstoff und/oder einer chemischen Modifikation, welche den entsprechenden Raman-aktiven Übergang aufweist. Dabei sind in Figur 2 das Grundniveau mit der Bezugsziffer 210 und das Raman-aktive Niveau mit der Bezugsziffer 212 bezeichnet. Die Niveaus 214 und 216 stellen virtuelle Niveaus dar. Wie sich aus Figur 2 ergibt, emittiert die Probe 112 beim Übergang vom Raman-aktiven Niveau 212 in das Grundniveau 210 Raman-Signal 218 der Frequenz ω_{R}, welches inkohärent ist, sowie, ausgehend vom virtuellen Niveau 216, Licht der Frequenz ω_{A} = 2 ω₁ - ω₂. Dieses Licht wird im Folgenden als CARS-Signal 220 bezeichnet. Beim CARS-Signal 220 handelt es sich, im Gegensatz zum Raman-Signal 218, um kohärent emittierte Strahlung.

Die Vorrichtung 110 weist eine Vielzahl von Linsen 126 - 136 im Strahlengang auf, welche gemeinsam eine bildgebende Optik 137 bilden. Diese Linsen 126 bis 136 sind in Figur 1 lediglich schematisch dargestellt, wobei die Bildgebung auch anders ausgestaltet sein kann als in Figur 1 dargestellt. Auch der Strahlengang der jeweiligen Lichtstrahlen ist lediglich schematisch abgebildet.

Mittels der Linsen 126 - 132 wird das Beleuchtungslicht 124 auf die Probe 112 abgebildet. Beispielsweise können hierzu eine oder mehrere der Linsen 126 - 132 als Zylinderlinsen oder ähnliche optische Elemente ausgebildet sein, welche geeignet sind, eine linienförmige Fokussierung des Beleuchtungslichts 124 auf der Probe 112 zu bewirken. Weiterhin kann, in Figur 1 nicht dargestellt, eine Scanvorrichtung vorgesehen sein, beispielsweise in Form eines oder mehrerer beweglicher Spiegelelemente, welche ausgestaltet ist, um die Position des Beleuchtungslichts auf der Probe 112 zu verändern, und so, beispielsweise gesteuert durch eine Steuervorrichtung 138, die Probe 112 abzuscannen.

Im Strahlengang des Beleuchtungslichts 124 ist ein räumlich trennender Strahlteiler 140 vorgesehen. Für die Ausgestaltung dieses räumlich trennenden Strahlteilers 140 kann beispielsweise auf die obige Beschreibung und den darin zitierten Stand der Technik verwiesen werden. Bevorzugte Ausführungsbeispiele derartiger räumlich trennender Strahlteiler 140 sind in den Figuren 3A und 3B dargestellt. So weisen in diesen Beispielen die räumlich trennenden Strahlteiler einen ersten Bereich 310 und einen zweiten Bereich 312 auf. Der erste Bereich 310, welcher in diesem Fall den Großteil der Fläche des räumlich trennenden Strahlteilers 140 einnimmt, weist (beispielsweise im Wesentlichen Wellenlängen-indifferent) eine hohe Transmission auf (beispielsweise eine Transmission von über 90% oder, vorzugsweise, über 95% für alle in Figur 2 dargestellten Frequenzen), wohingegen der zweite Bereich 312 eine hohe Reflektivität aufweist (beispielsweise eine Reflektivität größer als 90% oder vorzugsweise größer als 95%). Dieser zweite Bereich 312 (in den Figuren 3A und 3B zur Verdeutlichung schraffiert dargestellt) weist hingegen eine hohe Reflektivität für die Beleuchtungslicht-Frequenzen ω₁ und ω₂ sowie für das CARS-Signal 220 der Frequenz ω_{A} auf. Beispielsweise lassen sich die zweiten Bereiche 312 durch partielles Bedampfen auf transparentes Trägermaterial der räumlich trennenden Strahlteiler 140, beispielsweise mit metallischen und/oder dielektrischen Schichten, beispielsweise durch eine Maske, herstellen. Auch andere Herstelltechniken sind selbstverständlich einsetzbar. Alternativ kann der räumlich trennende Strahlteiler auch als MEMS-Array (MEMS = Micro E-lectro Mechanical System) ausgeführt sein. Besonders bevorzugt ist es dabei, wenn, wie in Figur 3A dargestellt, der zweite Bereich 312 im Wesentlichen rund oder (für eine Anordnung von vorzugsweise 45°) oval ausgestaltet ist.

In Figur 3B ist eine nicht erfindungsgemäße streifenförmige Ausgestaltung des zweiten Bereichs 312 dargestellt, wobei vorzugsweise auch hier dieser zweite Bereich 312 eine Breite von nicht mehr als ca. 0,5 mm aufweist. In diesem Fall läge das Flächenverhältnis im Prozentbereich. Die in Figur 3B dargestellte Anordnung eignet sich insbesondere für den oben beschriebenen Linienscan. Es sei darauf hingewiesen, dass neben den in den Figuren 3A und 3B dargestellten Ausgestaltungen des räumlich trennenden Strahlteilers 140 auch andere nicht erfindungsgemäße Ausgestaltungen möglich sind, beispielsweise Ausgestaltungen, in welchen die Transmissions- beziehungsweise Reflexionseigenschaften gegenüber den anhand von Figur 3A und 3B dargestellten Eigenschaften invertiert sind (also beispielsweise mit einem zentralen Bereich 312 mit hoher Transmission und einem peripheren Bereich 310 mit hoher Reflektivität). Auch Ausgestaltungen, in welchen jeweils mehr als ein Bereich 310, 312 verwendet werden, sind denkbar, beispielsweise Ausgestaltungen mit mehreren linienförmigen zweiten Bereichen 312 analog zur Darstellung in Figur 3B, beispielsweise mehreren parallel angeordneten Linien oder beliebigen anderen Mustern.

Der räumlich trennende Strahlteiler 140 in der Vorrichtung 110 gemäß Figur 1 wird für mehrere Zwecke eingesetzt. So besteht eine erste Aufgabe dieses räumlich trennenden Strahlteilers 140 darin, das Beleuchtungslicht 124 auf die Probe 112 zu lenken. Zu diesem Zweck kann beispielsweise die bildgebende Optik 137, insbesondere die Linsen 126 - 130 sowie gegebenenfalls eine Blende 142, so angeordnet sein, dass der zweite Bereich 312, welcher für das Beleuchtungslicht 124 hochreflektiv ist, in oder in der Nähe eines Fokuspunkts beziehungsweise der Pupille des Beleuchtungslichts 124 angeordnet ist, beispielsweise an einem Abbild der Blende 142 durch die Linsen 128 und 130.

Die zweite Wirkung des räumlich trennenden Strahlteilers 140 besteht, wie oben beschrieben, in der Trennung des von der Probe 112 emittierten Detektionslichts 144 vom Beleuchtungslicht 124. Dieses Detektionslicht, welches in Figur 1 symbolisch durch den Pfeil 144 angedeutet ist, setzt sich, wie oben beschrieben, aus einem kohärenten Anteil (Pfeil 146 in Figur 1) und einem inkohärenten Anteil 148 zusammen. Der kohärente Detektionslichtanteil 146 folgt in seinem Strahlengang unmittelbar dem kohärenten Beleuchtungslicht 124, aufgrund der Umkehrbarkeit des Strahlengangs und der kohärenten Eigenschaften des Lichts. Dementsprechend wird dieser kohärente Detektionslichtanteil 146 wieder auf den zweiten Bereich 312 des räumlich trennenden Strahlteilers 140 abgebildet und zurück in Richtung der Lichtquellen 114, 116 reflektiert. Der inkohärente Detektionslichtanteil 148 hingegen, welcher von der Probe 112 in alle Raumrichtungen emittiert wird und beispielsweise die Pupillenöffnung der Linse 132 vollständig ausleuchtet, weist den in Figur 1 symbolisch strichliert dargestellten Strahlengang auf. Dementsprechend leuchtet dieser inkohärente Detektionslichtanteil 148 die zur Verfügung stehende Öffnung des räumlich trennenden Strahlteilers 140 näherungsweise vollständig aus, wird also im Wesentlichen von diesem räumlich trennenden Strahlteiler 140 transmittiert. Der von dem zweiten Bereich 312 des räumlich trennenden Strahlteilers 140 in Richtung der Lichtquellen 114, 116 reflektierte Anteil dieses inkohärenten Detektionslichts ist aufgrund der vorzugsweise gleichmäßigen Ausleuchtung und des kleinen Flächenverhältnisses zwischen zweitem Bereich 312 und erstem Bereich 310 (siehe oben) vernachlässigbar klein. Der inkohärente Detektionslichtanteil 148 wird durch weitere Linsen 134, 136 sowie eine weitere Blende 150 auf eine zusätzliche Detektionsvorrichtung 152 abgebildet, deren Signal einer elektronischen Auswertungsvorrichtung 154 zugeführt wird.

Diese kohärenten Detektionslichtsanteile werden mittels eines zusätzlichen Strahlteilerelements 160, beispielsweise einem dichroitischen Spiegel, einem AOBS oder einem anderen zusätzlichen Strahlteilerelement gemäß der obigen Beschreibung, getrennt. Das kohärente Detektionslicht 146 wird einer Detektionsvorrichtung 162 zugeführt, deren Signale wiederum an die elektronische Auswertungsvorrichtung 154 weitergeleitet werden. Diese Signale korrelieren im Wesentlichen mit dem CARS-Signal 220 gemäß dem Termschema in Figur 2, also mit Licht der Frequenz ω_{A}. Die Steuervorrichtung 138 und die elektronische Auswertevorrichtung 154 können beispielsweise derart ausgestaltet sein, dass diese das CARS-Verfahren zur Untersuchung der Probe 112 ganz oder teilweise automatisiert steuern. So können beispielsweise die Wellenlängen der Laser 114, 116 automatisiert durch die Steuervorrichtung 138 vorgegeben werden. Weiterhin kann die Steuervorrichtung 138 auch mit der (nicht dargestellten) Scanoptik kommunizieren, um entsprechend der Stellsignale dieser Scanoptik entsprechende räumliche Bildinformationen zu generieren und gegebenenfalls an einen Benutzer auszugeben. Die Steuervorrichtung 138 und/oder die elektronische Auswertevorrichtung 154 ist dementsprechend vorteilhafterweise programmtechnisch eingerichtet, um die beschriebenen Aufgaben durchzuführen. Auch das oben beschriebene Mehrkanalbild oder ähnliche bildliche Darstellungsverfahren aufgrund der durch die Detektionsvorrichtungen 152, 162 zur Verfügung gestellten Signale können in der elektronischen Auswertungsvorrichtung 154 vorgenommen werden.

Abschließend sei noch darauf hingewiesen, dass die Vorrichtung 110 gemäß der Ausführungsbeispiele in Figur 1 vorzugsweise als konfokale Abbildungsvorrichtung eingerichtet ist, um eine optimale Auflösung der Darstellung bildlicher Informationen über die Probe 112 zu gewährleisten. Zu diesem Zweck kann eine Raumblende 150 und eine zugehörige Abbildungsoptik 134, 136 vor jedem Detektor eingefügt werden. Das erfindungsgemäße Verfahren, welches eine Untersuchung der Probe 112 mittels CARS und einem räumlich trennenden Strahlteiler 140 durchführt, lässt sich jedoch auch mittels anderer, beispielsweise nicht-konfokaler Aufbauten der Vorrichtung 110 durchführen. Weiterhin sei darauf hingewiesen, dass die in Figur 1 dargestellte Vorrichtung eine Vorrichtung zur Detektion des CARS-Signals 220 in Rückwärtsrichtung darstellt, eine Methode, welche üblicherweise als EPI-CARS bezeichnet wird. Alternativ oder zusätzlich könnte das CARS-Signal 220 jedoch auch in Vorwärtsrichtung (bei teil-transparenter Probe 112) detektiert werden, also in der Darstellung in Figur 1 unterhalb der Probe 112. Auch hier könnte wiederum eine Trennung von kohärentem und inkohärentem Detektionslichtanteil 146, 148 durch einen räumlich trennenden Strahlteiler 140 bewirkt werden. Die weiteren Aufbauten, insbesondere zur Trennung von kohärentem Detektionslicht 146 (insbesondere CARS-Signal 220) und kohärentem Beleuchtungslicht 124, erfolgen entsprechend dem Aufbau in Figur 1.

**Bezugszeichenliste**

| | | | |
|---|---|---|---|
| 110 | Vorrichtung zur Abbildung mindestens einer mikroskopischen Eigenschaft einer Probe | 310 | erster Bereich, hohe Transmission |
| 112 | Probe | 312 | zweiter Bereich, hohe Reflektivität |
| 114 | Laser 1 | | |
| 116 | Laser 2 | | |
| 118 | Beleuchtungslichtanteil ω₁ | | |
| 120 | Beleuchtungslichtanteil ω₂ | | |
| 122 | Strahlteiler | | |
| 124 | Beleuchtungslicht | | |
| 126 - 136 | Linsen | | |
| 137 | bildgebende Optik | | |
| 138 | Steuervorrichtung | | |
| 140 | räumlich trennender Strahlteiler | | |
| 142 | Blende | | |
| 144 | Detektionslicht | | |
| 146 | kohärentes Detektionslicht | | |
| 148 | inkohärentes Detektionslicht | | |
| 150 | Blende | | |
| 152 | Detektionsvorrichtung | | |
| 154 | elektronische Auswertungsvorrichtung | | |
| 160 | zusätzliches Strahlteilerelement | | |
| 162 | Detektionsvorrichtung | | |
| 210 | Grundniveau | | |
| 212 | Raman-aktives Niveau | | |
| 214 | virtuelles Niveau | | |
| 216 | virtuelles Niveau | | |
| 218 | Raman-Signal | | |
| 220 | CARS-Signal | | |

## Patentansprüche

1. Laser-Scan-Mikroskop zur Abbildung mindestens einer mikroskopischen Eigenschaft einer Probe (112),
umfassend mindestens eine Lichtquelle (114, 116) zur Erzeugung mindestens eines kohärenten Beleuchtungslichtes (124) mit mindestens einer Beleuchtungswellenlänge,
umfassend weiterhin mindestens eine Optik (137) zur Beleuchtung mit mindestens einem Beleuchtungslicht (124) mindestens eines Bereichs innerhalb beziehungsweise auf der Probe (112)
und einen Strahlteiler (140) zur räumlichen Trennung von von der Probe (112) emittiertem kohärentem Detektionslicht (146) von von der Probe (112) ausgesandtem inkohärentem Detektionslicht (148),
**gekennzeichnet durch** mindestens ein zusätzliches im Strahlengang angeordnetes Strahlteilerelement (160), das eingerichtet ist, um kohärentes Detektionslicht (146), dessen Wellenlänge von der Wellenlänge des Beleuchtungslichtes (124) verschieden ist, vom kohärenten Beleuchtungslicht zu trennen, welches von der Probe (112) emittiert wird,
sowie durch mindestens eine Detektionsvorrichtung (162) zur Detektion des kohärenten Detektionslichts (146)
und durch eine zusätzliche Detektionsvorrichtung (152) zur Detektion des von der Probe (112) emittierten inkohärenten Detektionslichts (148),
wobei das Laser-Scan-Mikroskop so ausgebildet ist, dass das kohärente Detektionssignal (146) ein CARS-, SHG-, Vierwellenmischungs-oder Frequenzmischungssignal ist und das inkohärente Detektionssignal (148) ein Raman-, Fluoreszenz-, Phosphoreszenz- oder FRET-Signal ist und wobei der Strahlteiler (140) mindestens zwei Bereiche (310, 312) mit unterschiedlichen Eigenschaften aufweist, mit mindestens einem ersten Bereich (310) mit hoher Transmission von über 90 % und mit mindestens einem zweiten Bereich (312) mit hoher Reflektivität von größer 90 %,
wobei der periphere erste Bereich (310) einen Großteil der Fläche des Strahlteilers (140) einnimmt, und
wobei der zentrale zweite Bereich (312) eine kreisförmige oder eine ovale oder eine elliptische Gestalt auf dem Strahlteiler (140) aufweist wobei der inkohärente Detektionslichtanteil (148) die zur Verfügung stehende Öffnung des Strahlteilers (140) näherungsweise vollständig ausleuchtet und dieser inkohärente Detektionslichtanteil (148) im Wesentlichen von diesem Strahlteiler (140) transmittiert wird,
und wobei der vom zweiten Bereich (312) des Strahlteilers (140) in Richtung der Lichtquelle (114, 116) reflektierte Anteil des inkohärenten Detektionslichts aufgrund einer gleichmäßigen Ausleuchtung und eines kleinen Flächenverhältnisses zwischen zweitem Bereich (312) und erstem Bereich (310) vernachlässigbar klein ist.

2. Laser-Scan-Mikroskop nach Anspruch 1, **dadurch gekennzeichnet, dass** das zusätzliche im Strahlengang angeordnete Strahlteilerelement (160) ausgebildet ist, um reflektiertes kohärentes Detektionslicht (146) vom Beleuchtungslicht (124) zu trennen.

3. Laser-Scan-Mikroskop nach Anspruch 2, **dadurch gekennzeichnet, dass** das zusätzliche im Strahlengang angeordnete Strahlteilerelement (160) ausgebildet ist, um kohärentes Detektionslicht (146) vom Beleuchtungslicht (124) nach unterschiedlichem Polarisationszustand zu trennen.

4. Laser-Scan-Mikroskop gemäß einem der vorhergehenden Ansprüche, **dadurch gekennzeichnet, dass** der erste Bereich (310) des Strahlteilers (140) eine Transmission von über 95 % und der zweite Bereich eine Reflektivität von größer 95 % aufweist.

5. Laser-Scan-Mikroskop gemäß einem der vorhergehenden Ansprüche, **dadurch gekennzeichnet, dass** die Lichtquelle (114, 116) mindestens eine Lichtquelle (114, 116) variabler Wellenlänge aufweist, insbesondere mindestens einen der folgenden Laser: einen Farbstofflaser, einen Gaslaser, einen Diodenlaser, einen Festkörperlaser.

6. Laser-Scan-Mikroskop gemäß einem der vorhergehenden Ansprüche, **dadurch gekennzeichnet, dass** die Lichtquelle (114, 116) mindestens eine gepulste Lichtquelle (114, 116) aufweist, insbesondere einen Piko- und/oder Femtosekundenlaser.

7. Laser-Scan-Mikroskop nach Anspruch 5 oder 6, **dadurch gekennzeichnet, dass** die mindestens eine Lichtquelle (114, 116) mindestens eine Vorrichtung zur Aufteilung des Beleuchtungslichts (124) in mindestens zwei Teilstrahlen umfasst, insbesondere einen Strahlteiler, sowie mindestens eine Vorrichtung zur Frequenzverschiebung mindestens eines der Teilstrahlen, insbesondere einen optisch parametrischen Oszillator.

8. Verfahren zur Abbildung mindestens einer mikroskopischen Eigenschaft einer Probe (112), mit folgenden Schritten:
a) mittels mindestens einer Lichtquelle (114, 116) wird mindestens ein kohärentes Beleuchtungslicht (124) mit mindestens einer Beleuchtungswellenlänge erzeugt;
b) das Beleuchtungslicht (124) wird auf mindestens einen Bereich innerhalb beziehungsweise auf der Probe (112) abgebildet;
c) von der Probe (112) emittiertes Detektionslicht (144) wird mittels eines Strahlteilers (140) in inkohärentes Detektionslicht (148) und kohärentes Detektionslicht (146) geteilt;
d) das kohärente Detektionslicht (146) wird durch mindestens ein zusätzliches Strahlteilerelement (160) vom kohärenten Beleuchtungslicht (124) getrennt, wobei das Strahlteilerelement (160) eingerichtet ist, um kohärentes Detektionslicht (146), dessen Wellenlänge von der Wellenlänge des Beleuchtungslichtes (124) verschieden ist, vom kohärenten Beleuchtungslicht zu trennen, welches von der Probe (112) emittiert wird,
e) das kohärente Detektionslicht (146) wird detektiert, wobei
f) zusätzlich das inkohärente Detektionslicht (148) detektiert wird und
g) wobei der Strahlteiler (140) mindestens zwei Bereiche (310, 312) mit unterschiedlichen Eigenschaften aufweist, mit mindestens einem ersten Bereich (310) mit hoher Transmission von über 90 % und mit mindestens einem zweiten Bereich (312) mit hoher Reflektivität von über 90 %, wobei der periphere erste Bereich (310) einen Großteil der Fläche des Strahlteilers (140) einnimmt,
h) und wobei der zentrale zweite Bereich (312) eine kreisförmige oder eine ovale oder eine elliptische Gestalt auf dem Strahlteiler (140) aufweist,
i) wobei der inkohärente Detektionslichtanteil (148) die zur Verfügung stehende Öffnung des Strahlteilers (140) näherungsweise vollständig ausleuchtet und dieser inkohärente Detektionslichtanteil (148) im Wesentlichen von diesem Strahlteiler (140) transmittiert wird,
und wobei der vom zweiten Bereich (312) des Strahlteilers (140) in Richtung der Lichtquelle (114, 116) reflektierte Anteil des inkohärenten Detektionslichts aufgrund einer gleichmäßigen Ausleuchtung und eines kleinen Flächenverhältnisses zwischen zweitem Bereich (312) und erstem Bereich (310) vernachlässigbar klein ist,
j) wobei das kohärente Detektionssignal (146) durch CARS, SHG, Vierwellenmischung oder Frequenzmischung und
das inkohärente Detektionssignal (148) durch Ramanstreuung, Fluoreszenz, Phosphoreszenz oder FRET erzeugt wird.

9. Verfahren nach Anspruch 8, **dadurch gekennzeichnet, dass** die Lichtquelle (114, 116) und/oder das Beleuchtungslicht (124) derart gewählt werden, dass die Probe (112) mit mindestens zwei Beleuchtungsfrequenzen bestrahlt wird, wobei die mindestens zwei Beleuchtungsfrequenzen derart gewählt werden, dass eine Linearkombination dieser Beleuchtungsfrequenzen der Frequenz eines quantenmechanischen Übergangs in der Probe (112) entspricht.

10. Verfahren nach Anspruch 9, **dadurch gekennzeichnet, dass** eine erste Beleuchtungsfrequenz und eine zweite Beleuchtungsfrequenz verwendet werden, wobei die Differenz zwischen den beiden Beleuchtungsfrequenzen einem Raman-aktiven Schwingungsübergang in der Probe (112) entspricht.

## Claims

1. A laser scanning microscope for imaging at least one microscopic property of a sample (112),
comprising at least one light source (114, 116) for generating at least coherent illumination light (124) of at least one illumination wavelength,
further comprising at least one optical system (137) for illuminating at least one area within or on the sample (112) with the at least one illumination light (124), and a beam splitter (140) for spatially separating coherent detection light (146) emitted from the sample (112) from the incoherent detection light (148) emitted from the sample (112),
**characterized by** at least one additional beam splitter element (160) arranged in the beam path and configured to separate coherent detection light (146), the wavelength of which is different from the wavelength of the illumination light (124), from the coherent illumination light emitted from the sample (112),
as well as by at least one detection device (162) for detection of the coherent detection light (146),
and by an additional detection device (152) for detection of the incoherent detection light (148) emitted from the sample (112),
the laser scanning microscope being configured such that the coherent detection signal (146) is a CARS signal, an SHG signal, a four-wave mixing signal or a frequency mixing signal, and the incoherent detection signal (148) is a Raman signal, a fluorescence signal, a phosphorescence signal or a FRET signal,
and wherein the beam splitter (140) has at least two areas (310, 312) with different properties, with at least one first area (310) with a high transmission of more than 90% and with at least a second area (312) with a high reflectivity of greater than 90%,
wherein the peripheral first area (310) takes up most of the area of the beam splitter (140), and
wherein the central second area (312) presents a circular or an oval or an elliptical shape on the beam splitter (140),
wherein the incoherent detection light portion (148) approximately completely illuminates the available opening of the beam splitter (140) and this incoherent detection light portion (148) is substantially transmitted by this beam splitter (140),
and wherein the portion of the incoherent detection light reflected by the second area (312) of the beam splitter (140) in the direction of the light source (114, 116) is negligibly small due to a uniform illumination and a small area ratio between the second area (312) and the first area (310).

2. The laser scanning microscope according to claim 1, **characterized in that** the additional beam splitter element (160) arranged in the beam path is configured to separate reflected coherent detection light (146) from the illumination light (124).

3. The laser scanning microscope according to claim 2, **characterized in that** the additional beam splitter element (160) arranged in the beam path is configured to separate coherent detection light (146) from the illumination light (124) according to a different polarization state.

4. The laser scanning microscope according to one of the preceding claims, **characterized in that** the first area (310) of the beam splitter (140) has a transmission of more than 95% and the second area has a reflectivity of greater than 95%.

5. The laser scanning microscope according to one of the preceding claims, **characterized in that** the light source (114, 116) has at least one light source (114, 116) of variable wavelength, in particular at least one of the following lasers: a dye laser, a gas laser, a diode laser, a solid-state laser.

6. The laser scanning microscope according to one of the preceding claims, **characterized in that** the light source (114, 116) has at least one pulsed light source (114, 116), in particular a pico-second and/or a femto-second laser.

7. The laser scanning microscope according to claim 5 or 6, **characterized in that** the at least one light source (114, 116) comprises at least one device for splitting the illumination light (124) into at least two partial beams, in particular a beam splitter, as well as at least one device for shifting the frequency of at least one of the partial beams, in particular an optical parametric oscillator.

8. A method for imaging at least one microscopic property of a sample (112), comprising the following steps:
a) at least coherent illumination light (124) of at least one illumination wavelength is generated by means of at least one light source (114, 116);
b) the illumination light (124) is imaged on at least one area within or on the sample (112);
c) detection light (144) emitted from the sample (112) is split by means of a beam splitter (140) into incoherent detection light (148) and coherent detection light (146);
d) the coherent detection light (146) is separated by at least one additional beam splitter element (160) from the coherent illumination light (124), the beam splitter element (160) being configured to separate coherent detection light (146), the wavelength of which is different from the wavelength of the illumination light (124), from the coherent illumination light emitted from the sample (112),
e) the coherent detection light (146) is detected, wherein
f) the incoherent detection light (148) is additionally detected, and
g) wherein the beam splitter (140) has at least two areas (310, 312) with different properties, with at least one first area (310) with a high transmission of more than 90% and with at least one second area (312) with a high reflectivity of greater than 90%, wherein the peripheral first area (310) takes up most of the surface of the beam splitter (140),
h) and wherein the central second area (312) has a circular or an oval or an elliptic shape on the beam splitter (140),
i) wherein the incoherent detection light portion (148) approximately completely illuminates the available opening of the beam splitter (140), and this incoherent detection light portion (148) is substantially transmitted by this beam splitter (140), and wherein the portion of the incoherent detection light reflected by the second area (312) of the beam splitter (140) in the direction of the light source (114, 116) is negligibly small due to a uniform illumination and a small area ratio between the second area (312) and the first area (310),
j) wherein the coherent detection signal (146) is generated by CARS, SHG, four-wave mixing and/or frequency mixing and
the incoherent detection signal (148) is generated by Raman scattering, fluorescence, phosphorescence or FRET.

9. The method according to claim 8, **characterized in that** the light source (114, 116) and/or the illumination light (124) are selected such that the sample (112) is irradiated with at least two illumination frequencies, wherein the at least two illumination frequencies are selected such that a linear combination of these illumination frequencies corresponds to the frequency of a quantum-mechanical transition in the sample (112).

10. The method according to claim 9, **characterized in that** a first illumination frequency and a second illumination frequency are used, wherein the difference between the two illumination frequencies corresponds to a Raman-active oscillation transition in the sample (112).

## Revendications

1. Microscope à balayage laser permettant de représenter au moins une propriété microscopique d'un échantillon (112),
comprenant au moins une source de lumière (114, 116) pour produire au moins une lumière d'éclairage cohérente (124) ayant au moins une longueur d'onde d'éclairage,
comprenant en outre au moins un système optique (137) pour l'éclairage par au moins une lumière d'éclairage (124) d'au moins une zone dans ou sur l'échantillon (112),
et un séparateur de faisceaux (140) pour la séparation spatiale d'une lumière de détection cohérente (146) émise par l'échantillon (112) d'une lumière de détection incohérente (148) émise par l'échantillon (112),
**caractérisé par** au moins un élément de séparateur de faisceaux (160) supplémentaire, disposé sur la trajectoire des faisceaux, qui est aménagé pour séparer une lumière de détection cohérente (146), dont la longueur d'onde est différente de la longueur d'onde de la lumière d'éclairage (124), de la lumière d'éclairage cohérente qui est émise par l'échantillon (112),
ainsi que par au moins un dispositif de détection (162) pour détecter la lumière de détection cohérente (146),
et par un dispositif de détection (152) supplémentaire pour détecter la lumière de détection incohérente (148) émise par l'échantillon (112),
le microscope à balayage laser étant réalisé de telle sorte que le signal de détection cohérent (146) est un signal CARS, SHG, de mélange à quatre ondes ou de mélange de fréquences et le signal de détection incohérent (148) est un signal de Raman, de fluorescence, de phosphorescence ou FRET,
et le séparateur de faisceaux (140) présentant au moins deux zones (310, 312) ayant des propriétés différentes, comprenant au moins une première zone (310) à transmission élevée de plus de 90 %, et au moins une deuxième zone (312) d'une réflectivité élevée supérieure à 90 %,
la première zone périphérique (310) occupant une grande partie de la superficie du séparateur de faisceaux (140), et
la deuxième zone centrale (312) présentant une configuration circulaire ou ovale ou elliptique sur le séparateur de faisceaux (140),
la partie de lumière de détection incohérente (148) illuminant presque complètement l'ouverture disponible du séparateur de faisceaux (140), et cette partie de lumière de détection incohérente (148) étant substantiellement transmise par ce séparateur de faisceaux (140),
et dans lequel la partie de la lumière de détection incohérente réfléchie par la deuxième zone (312) du séparateur de faisceaux (140) en direction de la source de lumière (114, 116) est négligeable en raison d'une illumination homogène et d'un petit rapport de surface entre la deuxième zone (312) et la première zone (310).

2. Microscope à balayage laser selon la revendication 1, **caractérisé en ce que** l'élément de séparateur de faisceaux (160) supplémentaire, disposé sur la trajectoire des faisceaux, est réalisé pour séparer de la lumière d'éclairage (124) la lumière de détection cohérente (146) réfléchie.

3. Microscope à balayage laser selon la revendication 2, **caractérisé en ce que** l'élément de séparateur de faisceaux (160) supplémentaire, disposé sur la trajectoire des faisceaux, est réalisé pour séparer de la lumière d'éclairage (124) la lumière de détection cohérente (146) selon un état de polarisation différent.

4. Microscope à balayage laser selon l'une quelconque des revendications précédentes, **caractérisé en ce que** la première zone (310) du séparateur de faisceaux (140) présente une transmission supérieure à 95 %, et la deuxième zone présente une réflectivité supérieure à 95 %.

5. Microscope à balayage laser selon l'une quelconque des revendications précédentes, **caractérisé en ce que** la source de lumière (114, 116) présente au moins une source de lumière (114, 116) de longueur d'onde variable, en particulier au moins l'un des lasers suivants : un laser à colorant, un laser à gaz, un laser à diode, un laser à solide.

6. Microscope à balayage laser selon l'une quelconque des revendications précédentes, **caractérisé en ce que** la source de lumière (114, 116) présente au moins une source de lumière (114, 116) en régime pulsé, en particulier un laser picoseconde et/ou un laser femtoseconde.

7. Microscope à balayage laser selon la revendication 5 ou 6, **caractérisé en ce que** ladite au moins une source de lumière (114, 116) comprend au moins un dispositif permettant de diviser la lumière d'éclairage (124) en au moins deux faisceaux partiels, en particulier un séparateur de faisceaux, ainsi qu'au moins un dispositif permettant de décaler la fréquence d'au moins l'un des faisceaux partiels, en particulier un oscillateur paramétrique optique.

8. Procédé permettant de représenter au moins une propriété microscopique d'un échantillon (112), comprenant les étapes suivantes :
a) au moins une lumière d'éclairage cohérente (124) ayant au moins une longueur d'onde d'éclairage est produite au moyen d'au moins une source de lumière (114, 116) ;
b) la lumière d'éclairage (124) est représentée sur au moins une zone dans ou sur l'échantillon (112) ;
c) une lumière de détection (144) émise par l'échantillon (112) est séparée au moyen d'un séparateur de faisceaux (140) en lumière de détection incohérente (148) et en lumière de détection cohérente (146) ;
d) la lumière de détection cohérente (146) est séparée par au moins un élément de séparateur de faisceaux supplémentaire (160) de la lumière d'éclairage cohérente (124), l'élément de séparateur de faisceaux (160) étant aménagé pour séparer la lumière de détection cohérente (146), dont la longueur d'onde est différente des longueurs d'onde de la lumière d'éclairage (124), de la lumière d'éclairage cohérente qui est émise par l'échantillon (112),
e) la lumière de détection cohérente (146) est détectée, dans lequel
f) de plus, la lumière de détection incohérente (148) est détectée, et
g) dans lequel le séparateur de faisceaux (140) présente au moins deux zones (310, 312) ayant des propriétés différentes, avec au moins une première zone (310) à transmission élevée supérieure à 90 % et avec au moins une deuxième zone (312) à réflectivité élevée supérieure à 90 %, la première zone périphérique (310) occupant une grande partie de la superficie du séparateur de faisceaux (140),
h) et dans lequel la deuxième zone centrale (312) présente une conformation circulaire ou ovale ou elliptique sur le séparateur de faisceaux (140),
i) dans lequel la partie de lumière de détection incohérente (148) illumine presque complètement l'ouverture disponible du séparateur de faisceaux (140), et cette partie de lumière de détection incohérente (148) est transmise substantiellement par ce séparateur de faisceaux (140),
et dans lequel la partie de la lumière de détection incohérente réfléchie par la deuxième zone (312) du séparateur de faisceaux (140) en direction de la source de lumière (114, 116) est négligeable en raison d'une illumination homogène et d'un petit rapport de surface entre la deuxième zone (312) et la première zone (310),
j) le signal de détection cohérent (146) étant produit par CARS, par SHG, par un mélange à quatre ondes ou par un mélange de fréquences, et le signal de détection incohérent (148) étant produit par diffusion Raman, par fluorescence, par phosphorescence ou par FRET.

9. Procédé selon la revendication 8, **caractérisé en ce que** la source de lumière (114, 116) et/ou la lumière d'éclairage (124) sont sélectionnées de telle sorte que l'échantillon (112) est irradié par au moins deux fréquences d'éclairage, lesdites au moins deux fréquences d'éclairage étant sélectionnées de telle sorte qu'une combinaison linéaire de ces fréquences d'éclairage correspond à la fréquence d'une transition en mécanique quantique dans l'échantillon (112).

10. Procédé selon la revendication 9, **caractérisé en ce qu'**une première fréquence d'éclairage et une deuxième fréquence d'éclairage sont utilisées, la différence entre les deux fréquences d'éclairage correspondant à une transition d'oscillation active en Raman dans l'échantillon (112).
